# EUROPEAN PATENT SPECIFICATION

(11) **EP 2 364 389 B1**
(45) Date of publication and mention of the grant of the patent: **26.07.2017**
(21) Application number: 09822263.1
(22) Date of filing: 21.10.2009
(51) Int. Cl.: E02F 3/43, E02F 3/36, G01C 9/00

(54) **A CONTROL SYSTEM FOR CONTROLLING A TILTROTATOR, A METHOD FOR CALIBRATING A CONTROL SYSTEM OF A TILTROTATOR AND A METHOD FOR LEVELING A TOOL ATTACHED TO A TILTROTATOR**
STEUERSYSTEM ZUR STEUERUNG EINES TILTROTATORS, VERFAHREN ZUM KALIBRIEREN EINES STEUERSYSTEMS EINES TILTROTATORS UND VERFAHREN ZUM HORIZONTIEREN EINES AN EINEM TILTROTATOR BEFESTIGTEN WERKZEUGS
SYSTÈME DE COMMANDE POUR COMMANDER UN ROTATEUR INCLINABLE, PROCÉDÉ D'ÉTALONNAGE, SYSTÈME DE COMMANDE DE ROTATEUR INCLINABLE ET PROCÉDÉ DE NIVÈLEMENT D'UN OUTIL FIXÉ À UN ROTATEUR INCLINABLE

(30) Priority: 21.10.2008 SE 0802244
(43) Date of publication of application: 14.09.2011
(73) Proprietor: Svab Hydraulik AB, 694 91 Hallsberg (SE)
(72) Inventor: BENGTSSON, Kenth, S-681 51 Kristinehamn (SE)
(74) Representative: Bergenstråhle Group AB
(86) International application number: PCT/SE2009/000469
(87) International publication number: WO 2010/047637

(56) References cited:
- WO-A1-03/068655
- WO-A1-2006/065154
- DE-C1- 10 150 089
- JP-A- 7 300 874
- JP-A- H07 300 874
- JP-A- 2005 121 437
- US-A- 4 277 899
- US-A1- 2006 230 645
- US-A1- 2009 158 625
- US-B1- 6 263 595
- US-B1- 6 823 616
- DATABASE WPI Week 200534, Derwent Publications Ltd., London, GB; AN 2005-327751, XP003027143 & JP 2005 121437 A (HITACHI CONSTR MACHINERY CO LTD) 12 May 2005
- FUJISHIMA K ET AL: "Calibration instrument of angle sensor, corrects deviation of design values based on design power characteristics and sensor output values corresponding to posture of boom", WPI / THOMSON,, 12 May 2005 (2005-05-12), XP003027143,

## Description

### TECHNICAL FIELD

The present invention concerns an engineering vehicle. Such an engineering vehicle comprises a rotatable platform with a manipulator apparatus for carrying a tool. More precisely the invention concerns a manipulator apparatus having at its distal end a tiltrotator. Especially the invention concerns a tiltrotator and a system for controlling the tiltrotator. In particular the invention concerns a control system for a tiltrotator and a method for controlling the tiltrotator.

A tiltrotator comprises a hydraulic wrist unit for direct manipulation of the tool. The tiltrotator is mounted between the manipulator apparatus and the tool normally attached to the manipulator apparatus. The tiltrotator makes it possible for the tool to be rotated through 360 degrees and laterally tilted +/- 40-45 degrees. Hence the tiltrotator provides an increasing flexibility and precision of the engineering vehicle.

### BACKGROUND OF THE INVENTION

From WO 2007/097698 (Jonsson) a tiltrotator is previously known the object of which is to improve the hydraulic coupling to a tool attached to the tiltrotator. Accordingly the tiltrotator has a hydraulic swivel comprising two running through ducts and means for temporary switching of the hydraulic flow to a temporarily attached tool.

From WO2008/076067 (Larker) another tiltrotator is previously known the object of which is to improve the method of manufacturing of the tiltrotator. This object is achieved by a method for manufacturing a tiltrotator where at least a part of the tiltrotator comprises austempered ductile iron (ADI).

A tiltrotator comprises a first attachment part, a tiltable part and a second attachment part. The first attachment part comprises first fastening means for fixing a first end of the tiltrotator to the distal end of a manipulator and a pair of flanges for carrying the tiltable part. The tiltable part comprises a stator part and a rotor part for continuous rotation. The stator part is tiltably connected to the first attachment part and the rotor part is fixedly connected to the second attachment part. The rotation movement is accomplished by a hydraulic motor. The second attachment part comprises second fastening means for fixing the second end of the tiltrotator to a tool. Between the first attachment part and the tiltable part there is at least one hydraulic actuator for accomplishing the tilting movement of the tiltable part. In an embodiment of the tiltrotator the actuating means comprises a telescopic cylinder. In another embodiment the tiltrotator comprises gripping means.

A control system for a tiltrotator comprises control means, a controller, a feeder pilot, a feed valve block, a hydraulic pump and a plurality of external valves. The control means comprises at least one joystick having a plurality of proportionally operated electronic means for being manipulated by the fingers of an operator. The controller comprises computer means and memory means for executing computer programmable control functions in demand of the operator. The feeder pilot comprises means for providing to the feed valve block a pressure in demand of the controller. The feed valve block or feeder provides to the plurality of proportional external valves a sufficient amount of hydraulic fluid under pressure to perform the movements of the tiltrotator.

The external valves are designed to operate at low hydraulic pressure.

Thus if the valve receives too high a hydraulic pressure the valve will get stuck resulting in loss of operation. Calibrating the control system is therefore a cumbersome task especially since each tool requires different calibration.

Normally integrated into the tiltrotator there is a quick attachable hydraulic swivel that provides extra hydraulic functions to power and manipulate other tools such as a breaker, grapple or an auger. These tools may be attachable with a quickcoupler located on the tiltrotator. Such simplified attachment mounting dramatically increasing the machine's utilization on the jobsite.

Prior art document D1, JP H07 300874 A discloses a control device of a power shovel, wherein a changeover switch 47 is set at an automatic operation to close logic valves 28, 29 and to open logic valves 35, 36. A bucket angle is sensed by an inclinometer 13 of a bucket 11 to output it to a servo amplifier 42 and a setting device 43 outputs a bucket set angle to the servo amplifier 42. Next, the sensed angle of the bucket 11 and the set angle are compared with output a signal in proportion to the difference between the sensed angle and the set angle from the amplifier 42 to a servo valve 39. The valve 39 is opened or closed to control a pilot control switching valve 23 so that the bucket angle is changed by operating a hydraulic cylinder 12.

Prior art document D2, US6263595 B1, discloses an improved level indicating system provided for use with excavating equipment based upon a family of laser light receivers. In a first embodiment, a laser receiver with a single "long" photocell is mounted directly on the dipperstick of an excavator in a position that is designed to intercept pulses of laser light being emitted by a rotating laser light transmitter, and an angle-sensing sensor is also mounted to the dipperstick.

Prior art document D3, JP2005121437 A, discloses a calibration device for angle sensor comprising angle sensors 21b, 21 a for detecting turning angles of a boom 4b and an arm 4a, a storage device 12 for storing a design output characteristic indicating a relation between output values xb, xa of the angle sensors and detection angles yb, ya corresponding to the output values, cylinders 7b, 7a for turning the boom 4b and the arm 4a to the first posture and second posture.

### SUMMARY OF THE INVENTION

A primary object of the present invention is to seek ways to improve the control system of a tiltrotator.

This object is achieved according to the invention by a control system characterized by the features in independent claim 1 or by a method characterized by the steps in independent claim 5 and 10.

Embodiments of the invention are described in the dependent claims.

According to the invention an inclinometer is introduced in the control system to indicate the orientation of the tool attached to the tiltrotator. By a signal from the inclinometer the inclination of the tool is provided in every moment of time. In an embodiment of the invention the angular speed of the tilting movement of the tiltrotator is measured by the inclinometer. According to the invention the inclinometer is used to calibrate the control system.

An inclinometer or clinometer is an instrument for measuring angles of tilt, elevation or inclination of an object with respect to gravity. It is also known as a tilt meter, tilt indicator, slope alert, slope gauge, gradient meter, gradiometer, level gauge, level meter, declinometer, and pitch & roll indicator. Clinometers measure both inclines (positive slopes, as seen by an observer looking upwards) and declines (negative slopes, as seen by an observer looking downwards).

When maneuvering the tiltrotator the operator manipulates the control means on the joystick. To initiate a first movement of the tiltrotator the operator manipulates a first control means. A first signal proportional to the position of the control means is sent to the controller. The controller calculates the amount of hydraulic flow necessary for this operation and sends a signal to the feeder pilot. Upon receiving this signal the feeder pilot responds by applying a pressure on the feeder. The feeder thereby provides a sufficient hydraulic flow to the external valves in conformity with the requirement of the first movement. The controller also sends a signal to the appropriate external valve to proportionally redirect the flow to the hydraulic equipment to perform the first movement initiated by the operator.

When the operator still controlling the first movement of the tiltrotator initiate a second movement by manipulating a second control means a second signal is sent to the controller. In this situation the controller calculates the amount of flow necessary for both operations and sends a new signal to the feeder pilot to *affect* a new pressure to the feeder.

This pressure corresponds to a sufficient hydraulic flow to the external valves for both these operations. The controller also sends a signal to the appropriate external valve to proportionally redirect the flow to the hydraulic equipment to perform the second movement initiated by the operator.

From measurements it has been found certain proportionality between the hydraulic flows necessary for different movements. Thus if the control system is calibrated for a first few parameters only the other parameters is set by a cluster of predetermined parameters. There are different clusters of parameters for different brands and sizes of the tiltrotator and the tools. The main challenge has been to correctly calibrate the first few parameters.

In an embodiment of the invention the first few parameters to calibrate are the feeder start level and the feeder end level. Since the flow provided by the feeder is related to the pressure provided from the feeder pilot and the pressure from the feeder pilot is related to the electric current from the controller the feeder start and end levels comprises the electric current from the controller. The feeder start level therefore comprises the electric current to make the feeder provide a sufficient hydraulic flow for the tiltrotator to start moving. The feeder end level comprises the electric current to make the feeder provide a sufficient hydraulic flow for the tiltrotator to move at a predetermined speed. These currents are measured during a calibration cycle where the tiltrotator is maneuvered from a start position to a stop position.

To define the feeder start level the tiltrotator must be moved in an increasing slope. The start position therefore comprises the tool being maneuvered to a vertical position where the center of gravity of the tool lies in the vertical plane. The stop position in this embodiment comprises a position adjacent the start position but on the increasing slope side. In yet a further embodiment of the invention the stop position is defined as a position in an infinitesimal distance from the start position. Hence by performing the calibration cycle the current from the controller is slowly raised until the tiltrotator starts moving from the start position to the stop position. The measured current comprises the feeder start level.

To define the feeder end level the tiltrotator must be moved a sufficient slope. In an embodiment this slope is a full tilt from side to side. Hence the start position of the calibration cycle comprises the first end position and the stop position comprises the second end position. The current measured during this movement comprises the feeder end level. A mid position is defined to be a position at equal distances from the first and second end positions. In another embodiment to define the feeder end level the start position comprises the mid position and the stop position comprises the first end position. In a further embodiment to define the feeder end level the calibration cycle contains a plurality of movement back and forth of the tiltrotator from the start position to the stop position.

The use of an inclinometer also offers the possibility of moving the tool in a vertical fashion. In an embodiment of the invention an inclinometer is integrated into the control system such that the vertical position of the tool is achievable. In case of a bucket the cutting edge will then be horizontal. In an embodiment of the invention a signal from the inclinometer affects an indication device from which the operator is informed of the orientation of the tool. This indication may be in the form of a display, lamps or any other such indicators. In an embodiment of the invention a signal from the inclinometer is received by the control system by which the control system autonomously maneuvers the tool to assume a predetermined orientation. Thus while the operator maneuvers the boom and stick of an excavator the control system autonomously keeps the tool, such as a bucket, in a vertical orientation.

In a first aspect of the invention the object is achieved by a control system for maneuvering a tiltrotator comprising control means, a controller, a feeder pilot, a feeder and a plurality of external proportional valves for controlling the movements of the tiltrotator, wherein the control system further comprises an inclinometer providing to the controller the orientation of a tool attached to the tiltrotator. In an embodiment of the invention the control system further comprises a valve assembly to be applied on the tiltrotator, which valve assembly contains the external valves and the inclinometer. In an embodiment of the invention the control system comprises an indicator means for providing to the operator the orientation of the tool. In an embodiment of the invention the control system comprises an automatic tilting device by which the tilting movement is performed autonomously and the hydraulic flow is defined to calibrate the control system.

In a second aspect of the invention the object is achieved by a method for calibrating a control system of a tiltrotator, the control system comprising control means, a controller, a feeder pilot, a feeder and a plurality of external valves for controlling the movements of the tiltrotator, wherein an inclinometer is provided to indicate the orientation of the tiltrotator, the tiltrotator is moved in a calibration cycle comprising a start position and a stop position, a calibration parameter is defined by measuring the electric current of the feeder pilot, and the control system is calibrated from a set of predefined parameters corresponding to the measured calibration parameter. In an embodiment of the invention the start position comprises the vertical position of the tiltrotator, the stop position comprises an adjacent position of the tiltrotator and the calibration parameter is defined as the feeder start level. In an embodiment of the invention the start position comprises the first end position of the tiltrotator, the stop position comprises the second end position of the tiltrotator, and the calibration parameter is defined as the feeder end level. In an embodiment of the invention the method comprises the movement of the tiltrotator being maneuvered by the operator. In an embodiment the tiltrotator is autonomously maneuvered by the control system itself. In yet an embodiment of the invention the calibration cycle is performed a plurality of times.

In a third aspect of the invention the object is achieved by a method for leveling a tool attached to a tiltrotator having a control system comprising control means, a controller, a feeder pilot, a feeder and a plurality of external valves for controlling the movements of the tiltrotator, wherein an inclinometer is provided to indicate the orientation of a tool attached to the tiltrotator, a signal corresponding to the orientation of the tool is received from the inclinometer, and the necessary movements of the tiltrotator is calculated to get the tool in the vertical orientation. In an embodiment the controller autonomously control the tiltrotator to assume the vertical orientation irrespective of the operator's manipulation of the manipulator apparatus to which the tiltrotator is attached.

### BRIEF DESCRIPTION OF THE DRAWINGS

Other features and advantages of the present invention will become more apparent to a person skilled in the art from the following detailed description in conjunction with the appended drawings in which:
Fig. 1 is a principal circuit of a control apparatus according the invention, and
Fig. 2 is a tiltrotator according to the invention.

### DESCRIPTION OF PREFERRED EMBODIMENTS

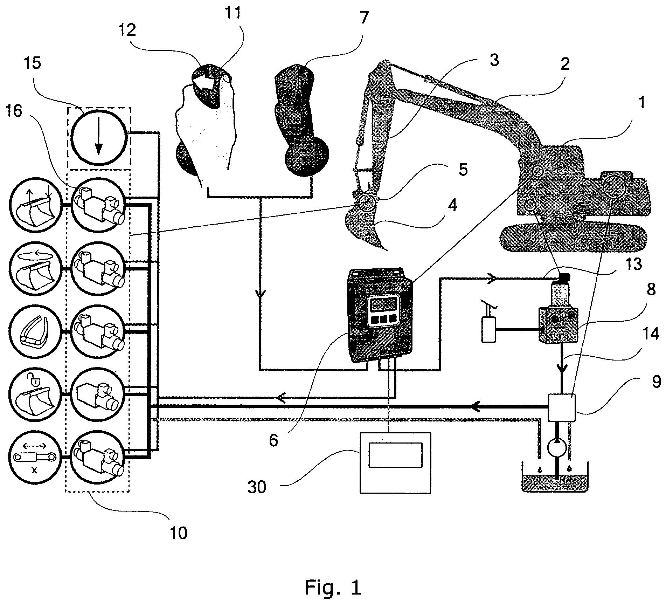

A control system for controlling the hydraulic power flow of a tiltrotator according to the invention is shown in fig. 1. In the fig. the control system is shown in connection to an excavator 1 having a boom 2, a stick 3 and a bucket 4. A tiltrotator 5 is arranged between the stick and the bucket to increase the maneuvering possibilities of the bucket. The control system comprises a controller 6, control means 7, a feeder pilot 8, a feeder 9 and a valve assembly unit 10. The controller 6 includes computer means and memory means for executing a computer program. The control means 7 are being manipulated by an operator. In the example shown the control means comprises a pair of joysticks 11 with proportionally moveable rollers or thumbwheels 12. The feeder pilot 8 receives an electric signal 13 from the controller and *affects* the feeder with a pressure 14 in proportion to the electric signal. The feeder provides to the valve assembly unit a hydraulic flow in proportion to the pressure from the feeder pilot. The valve assembly unit 10 comprises a plurality of external proportional valves 16 for operating the plurality of movements of the tiltrotator. Thus by the supervision of the controller the valves of the valve assembly unit receives the signal to maneuvers and simultaneously a sufficient hydraulic flow to perform the operation at the operator's demand.

According to the invention the control system further comprises an inclinometer 15. In the embodiment shown the inclinometer is included in the valve assembly unit 10 and in electronic contact with the controller. The orientation of the valve assembly in comparison with the axis of gravity is continuously measured by the inclinometer. Thus by attaching the valve assembly unit to the tiltable part of the tiltrotator the inclination -of the tool may be measured.

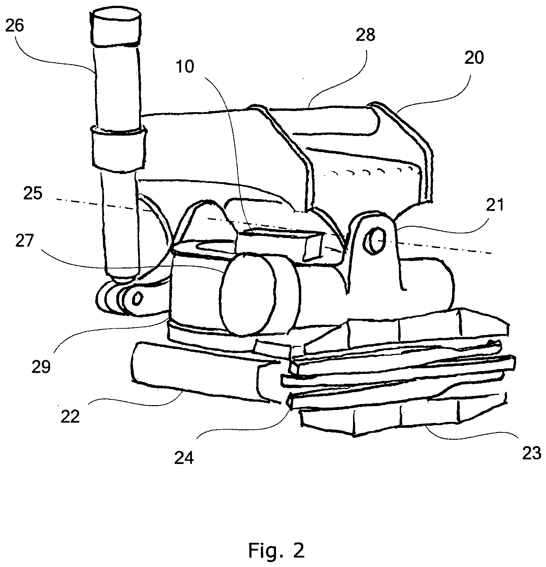

A common tiltrotator is shown in fig. 2. The tiltrotator comprises a first attachment part 20, a tiltable part 21 and a second attachment part 22. In the embodiment shown the tiltrotator also comprises a gripping device 23 with hydraulically maneuverable gripping arms 24. The first attachment part has fastening means 28 for being attached to the stick of an excavator. The tiltable part comprises a stator part 29, a hydraulic motor 27 for continuous rotation of a rotor part (hidden) fixed to the second attachment part. For movement around a tilting axis 25 there is arranged a telescopic hydraulic cylinder 26. In the embodiment shown the valve unit 10 is located on the stator part.

In order to calibrate the control system the tiltrotator and the attached tool is maneuvered in a calibration cycle having a start position and a stop position. In a first embodiment the start position comprises the tiltrotator being moved to assume the vertical position facilitated by the inclinometer. The electric current of the feeder pilot is slowly increased until the tiltrotator is starting to move, that is assuming the stop position. The measured electric current comprises a first calibration parameter denoted as the feeder start level. In a second embodiment the start position comprises a first end position of the tiltrotator and the stop position comprises a second end position of the tiltrotator. The electric current of the feeder pilot is measured during at least one calibration cycle and denoted the feeder end level. From these measurements and a set of predetermined parameters the control system is calibrated. The calibration is further enhanced by performing a plurality of tilting movements.

The controller also comprises means for reading electronic signals from the joysticks. In an embodiment of the control system the feeder pilot is connected to a pedal for manual operation. The plurality of external valves comprises each a proportionally controllable valve to effect movements of a tiltrotator part in a speed controlled by the operator. The controller comprises means to output electric current to a proportional pressure reducer. The controller also comprises means to output electric current to the plurality of external valves.

In an embodiment of the invention the tiltrotator is orientated to lie in the vertical plane autonomously by the control system itself. Thus the calibration cycle may be performed and the calibration parameters measured automatically by the control system. In an embodiment the vertical orientation of the tool is autonomously accomplished by the control system also when the operator maneuvers the boom and stick of the excavator. In a further embodiment the signal from the inclinometer is displayed on an orientation indicator 30. By the indicator the operator is informed of the orientation of the tool while operating the excavator.

Although favorable the scope of the invention must not be limited by the embodiments presented but contain also embodiments obvious to a person skilled in the art. For instance the control system may be applied on any hydraulically or electrically maneuvered tool carrying system, such as for instance cranes and industrial robots.

## Claims

1. Control system for controlling a tiltrotator (5) comprising a controller (6), control means (7) for influencing the controller, a feeder (9) for supplying a hydraulic flow, a feeder pilot (8) for influencing the supply of hydraulic flow in proportion to a signal (13) from the controller (6) and a plurality of external proportional valves (16) for controlling the movements of the tiltrotator, **characterized in that** the control system further comprises an inclinometer (15) providing the controller with information of the orientation of the tiltrotator.

2. Control system according to claim 1, wherein the control system further comprises a valve assembly unit (10) to be applied on the tiltrotator, which valve assembly unit contains the external proportional valves and the inclinometer.

3. Control system according to claim 1 or 2, wherein the control system comprises indicator means (30) for providing to the operator the information of the orientation of a tool (4) attached to the tiltrotator.

4. Control system according to any of the preceding claims, wherein control system comprises automatic tilting means by which a calibration cycle is autonomously performed and calibration parameter is automatically measured.

5. Method for calibrating a control system of a tiltrotator (5), the control system comprising a controller (6), control means (7) for influencing the controller, a feeder (9) for supplying a hydraulic flow, a feeder pilot (8) for influencing the supply of hydraulic flow in proportion to a signal (13) from the controller (6) and a plurality of external valves (16) for controlling the movements of the tiltrotator, **characterized by** attaching to the tiltrotator an inclinometer (15) to indicate the orientation of a tool (4), moving the tiltrotator in a calibration cycle comprising a start position and a stop position, receiving from the inclinometer the angular speed of the movement of the tiltrotator, defining a calibration parameter by measuring the electric current (13) of the feeder pilot correspondent to the angular speed, and calibrating the control system by a set of predefined parameters and the calibration parameter.

6. Method for calibrating a control system according to claim 5, wherein the start position comprises the vertical position of the tiltrotator, the stop position comprises an adjacent position of the tiltrotator and the calibration parameter is defined as the feeder start level.

7. Method for calibrating a control system according to claim 5, wherein the start position comprises the first end position of the tiltrotator, the stop position comprises the second end position of the tiltrotator, and the calibration parameter is defined as the feeder end level.

8. Method for calibrating a control system according to claim 5 - 7, wherein the tiltrotator is autonomously maneuvered by the control system itself.

9. Method for calibrating a control system according to claim 5 - 8, wherein the calibration cycle is performed a plurality of times.

10. Method for leveling a tool (4) attached to a tiltrotator(5) carried by a manipulator apparatus maneuverable by a control system comprising a controller (6), control means (7) for influencing the controller, a feeder (9) for supplying a hydraulic flow, a feeder pilot (8) for influencing the supply of hydraulic flow in proportion to a signal (13) from the controller (6) and a plurality of external valves (16) for controlling the movements of the tiltrotator, **characterized by** attaching an inclinometer (15) to the tiltrotator to indicate the orientation of a tool (4), receiving from the inclinometer a signal corresponding to the orientation of the tool, calculating the necessary movements of the tiltrotator to maneuver the tool to assume the vertical orientation, maneuvering autonomously the tiltrotator to assume the vertical orientation irrespective of the operator's maneuvering of the manipulator apparatus carrying the tiltrotator.

11. Computer program product storable on a computer readable medium containing instructions for a computer processor to execute the method of claim 5 to 10.

12. Computer readable medium containing thereon a computer program product according to claim 11.

13. Use of a control system according to any of claims 1 to 4, or a method according to a method according to any of claims 5 to 10 for operating an excavator (1).

## Patentansprüche

1. Steuersystem zur Steuerung eines Tiltrotators (5), umfassend ein Steuergerät (6), Steuermittel (7) zur Beeinflussung des Steuergeräts, eine Zuführvorrichtung (9) zur Zufuhr einer hydraulischen Strömung, eine Zuführvorrichtungs-Vorsteuerung (8) zur Beeinflussung der Zufuhr hydraulischer Strömung im Verhältnis zu einem Signal (13) von dem Steuergerät (6), und eine Vielzahl externer Proportionalventile (16) zur Steuerung der Bewegungen des Tiltrotators, **dadurch gekennzeichnet, dass** das Steuersystem weiter einen Neigungsmesser (15) umfasst, der das Steuergerät mit Information über die Ausrichtung des Tiltrotators versieht.

2. Steuersystem nach Anspruch 1, wobei das Steuersystem weiter eine Ventilbaugruppeneinheit (10) zur Anwendung an dem Tiltrotator umfasst, welche Ventilbaugruppeneinheit die externen Proportionalventile und den Neigungsmesser enthält.

3. Steuersystem nach Anspruch 1 oder 2, wobei das Steuersystem Anzeigemittel (30) umfasst, um der Bedienperson die Information über die Ausrichtung eines an dem Tiltrotators angebrachten Werkzeugs (4) bereitzustellen.

4. Steuersystem nach einem der vorhergehenden Ansprüche, wobei das Steuersystem automatische Tiltmittel umfasst, durch die ein Kalibrierzyklus autonom durchgeführt und Kalibrierparameter automatisch gemessen wird.

5. Verfahren zum Kalibrieren eines Steuersystems eines Tiltrotators (5), wobei das Steuersystem ein Steuergerät (6), Steuermittel (7) zur Beeinflussung des Steuergeräts, eine Zuführvorrichtung (9) zur Zufuhr einer hydraulischen Strömung, eine Zuführvorrichtungs-Vorsteuerung (8) zur Beeinflussung der Zufuhr hydraulischer Strömung im Verhältnis zu einem Signal (13) von dem Steuergerät (6), und eine Vielzahl externer Ventile (16) zur Steuerung der Bewegungen des Tiltrotators umfasst, **gekennzeichnet durch** Anbringen eines Neigungsmessers (15) an dem Tiltrotator zum Anzeigen der Ausrichtung eines Werkzeugs (4), Bewegen des Tiltrotators in einem Kalibrierzyklus, umfassend eine Startposition und eine Stopposition, von dem Neigungsmesser Empfangen der Winkelgeschwindigkeit der Bewegung des Tiltrotators, Definieren eines Kalibrierparameters durch Messen des elektrischen Stroms (13) der Zuführvorrichtungs-Vorsteuerung entsprechend der Winkelgeschwindigkeit, und Kalibrieren des Steuersystems durch einen Satz vordefinierter Parameter und den Kalibrierparameter.

6. Verfahren zum Kalibrieren eines Steuersystems nach Anspruch 5, wobei die Startposition die vertikale Position des Tiltrotators umfasst, die Stopposition eine benachbarte Position des Tiltrotators umfasst und der Kalibrierparameter als das Zuführvorrichtungsstartniveau definiert ist.

7. Verfahren zum Kalibrieren eines Steuersystems nach Anspruch 5, wobei die Startposition die erste Endposition des Tiltrotators umfasst, die Stopposition die zweite Endposition des Tiltrotators umfasst und der Kalibierparameter als das Zuführvorrichtungsendniveau definiert ist.

8. Verfahren zum Kalibrieren eines Steuersystems nach Anspruch 5-7, wobei der Tiltrotator durch das Steuersystem selbst autonom manövriert wird.

9. Verfahren zum Kalibrieren eines Steuersystems nach Anspruch 5-8, wobei der Kalibrierzyklus mehrere Male durchgeführt wird.

10. Verfahren zum Horizontieren eines Werkzeugs (4), das an einem Tiltrotator (5) angebracht ist, der von einem Manipuliergerät getragen wird, das von einem Steuersystem manipulierbar ist, umfassend ein Steuergerät (6), Steuermittel (7) zur Beeinflussung des Steuergeräts, eine Zuführvorrichtung (9) zur Zufuhr einer hydraulischen Strömung, eine Zuführvorrichtungs-Vorsteuerung (8) zur Beeinflussung der Zufuhr hydraulischer Strömung im Verhältnis zu einem Signal (13) von dem Steuergerät (6), und eine Vielzahl externer Ventile (16) zur Steuerung der Bewegungen des Tiltrotators, **gekennzeichnet durch** Anbringen eines Neigungsmessers (15) an dem Tiltrotator zum Anzeigen der Ausrichtung eines Werkzeugs (4), von dem Neigungsmesser Empfangen eines Signals, das der Ausrichtung des Werkzeugs entspricht, Berechnen der notwendigen Bewegungen des Tiltrotators zum Manövrieren des Werkzeugs zur Annahme der vertikalen Ausrichtung, autonom Manövrieren des Tiltrotators zur Annahme der vertikalen Ausrichtung ungeachtet des Manövrierens durch die Bedienperson des Manipuliergeräts, das den Tiltrotator trägt.

11. Computerprogramm, das auf einem computerlesbaren Medium speicherbar ist, das Instruktionen für einen Computerprozessor zur Ausführung des Verfahrens von Anspruch 5 bis 10 enthält.

12. Computerlesbares Medium, das darauf ein Computerprogrammprodukt nach Anspruch 11 enthält.

13. Anwendung eines Steuersystems nach einem der Ansprüche 1 bis 4, oder eines Verfahrens nach einem Verfahren nach einem der Ansprüche 5 bis 10 zur Bedienung eines Baggers (1).

## Revendications

1. Système de commande pour commander un rotateur inclinable (5) comprenant un régulateur (6), des moyens de commande (7) pour influencer le régulateur, un alimentateur (9) pour alimenter un flux hydraulique, un pilote d'alimentateur (8) pour influencer l'alimentation du flux hydraulique en proportion d'un signal (13) issu du régulateur (6) et une pluralité de vannes proportionnelles externes (16) pour commander les mouvements du rotateur inclinable, **caractérisé en ce que** le système de commande comprend en outre un inclinomètre (15) fournissant au régulateur des informations sur l'orientation du rotateur inclinable.

2. Système de commande selon la revendication 1, dans lequel le système de commande comprend une unité d'assemblage de vannes (10) à appliquer au rotateur inclinable, laquelle unité d'assemblage de vannes contient les vannes proportionnelles externes et l'inclinomètre.

3. Système de commande selon la revendication 1 ou 2, dans lequel le système de commande comprend des moyens indicateurs (30) pour fournir à l'opérateur les informations sur l'orientation d'un outil (4) fixé au rotateur inclinable.

4. Système de commande selon l'une quelconque des revendications précédentes, dans lequel le système de commande comprend des moyens d'inclinaison automatiques par lesquels un cycle d'étalonnage est effectué de manière autonome et un paramètre d'étalonnage est mesuré automatiquement.

5. Procédé d'étalonnage d'un système de commande d'un rotateur inclinable (5), le système de commande comprenant un régulateur (6), des moyens de commande (7) pour influencer le régulateur, un alimentateur (9) pour alimenter un flux hydraulique, un pilote d'alimentateur (8) pour influencer l'alimentation du flux hydraulique en proportion d'un signal (13) issu du régulateur (6) et une pluralité de vannes externes (16) pour commander les mouvements du rotateur inclinable, **caractérisé par** la fixation au rotateur inclinable d'un inclinomètre (15) pour indiquer l'orientation d'un outil (4), le déplacement du rotateur inclinable dans un cycle d'étalonnage comprenant une position de départ et une position d'arrêt, la réception de l'inclinomètre de la vitesse angulaire du mouvement du rotateur inclinable, la définition d'un paramètre d'étalonnage par mesure du courant électrique (13) du pilote d'alimentateur correspondant à la vitesse angulaire et l'étalonnage du système de commande par un ensemble de paramètres prédéfinis et le paramètre d'étalonnage.

6. Procédé d'étalonnage d'un système de commande selon la revendication 5, dans lequel la position de départ comprend la position verticale du rotateur inclinable, la position d'arrêt comprend une position adjacente du rotateur inclinable et le paramètre d'étalonnage est défini comme le niveau de départ de l'alimentateur.

7. Procédé d'étalonnage d'un système de commande selon la revendication 5, dans lequel la position de départ comprend la première position d'extrémité du rotateur inclinable, la position d'arrêt comprend la seconde position d'extrémité du rotateur inclinable, et le paramètre d'étalonnage est défini comme le niveau d'extrémité de l'alimentateur.

8. Procédé d'étalonnage d'un système de commande selon les revendications 5-7, dans lequel le rotateur inclinable est manoeuvré de manière autonome par le système de commande lui-même.

9. Procédé d'étalonnage d'un système de commande selon les revendications 5-8, dans lequel le cycle d'étalonnage est effectué une pluralité de fois.

10. Procédé de nivellement d'un outil (4) fixé à un rotateur inclinable (5) porté par un appareil de manipulation manoeuvrable par un système de commande comprenant un régulateur (6), des moyens de commande (7) pour influencer le régulateur, un alimentateur (9) pour alimenter un flux hydraulique, un pilote d'alimentateur (8) pour influencer l'alimentation du flux hydraulique en proportion d'un signal (13) issu du régulateur (6) et une pluralité de vannes externes (16) pour commander les mouvements du rotateur inclinable, **caractérisé par** la fixation d'un inclinomètre (15) au rotateur inclinable afin d'indiquer l'orientation d'un outil (4), la réception de l'inclinomètre d'un signal correspondant à l'orientation de l'outil, le calcul des mouvements nécessaires du rotateur inclinable pour manoeuvrer l'outil pour assumer l'orientation verticale, la manoeuvre autonome du rotateur inclinable pour assumer l'orientation verticale quelle que soit la manoeuvre par l'opérateur de l'appareil de manipulation portant le rotateur inclinable.

11. Produit de programmation informatique stockable sur un support lisible sur ordinateur contenant des instructions pour qu'un processeur d'ordinateur exécute le procédé selon les revendications 5 à 10.

12. Support lisible sur ordinateur contenant un produit de programmation informatique selon la revendication 11.

13. Utilisateur d'un système de commande selon l'une quelconque des revendications 1 à 4 ou d'un procédé selon un procédé selon l'une quelconque des revendications 5 à 10 pour actionner un excavateur (1).
